# EUROPÄISCHE PATENTSCHRIFT

(11) **EP 1 142 527 B1**
(45) Veröffentlichungstag und Bekanntmachung des Hinweises auf die Patenterteilung: **19.11.2008**
(21) Anmeldenummer: 00128235.9
(22) Anmeldetag: 27.12.2000
(51) Int. Cl.: A47L 15/42, A47L 15/48

(54) **Verfahren zur Wärmerückgewinnung bei einer Geschirrspülmaschine**
Method for recovering heat in a dishwasher
Procédé pour récupérer de la chaleur dans un lave-vaisselle

(30) Priorität: 17.03.2000 DE 10013399
(43) Veröffentlichungstag der Anmeldung: 10.10.2001
(73) Patentinhaber: AEG Hausgeräte GmbH, 90429 Nürnberg (DE)
(72) Erfinder: Steiner, Winfried, 90762 Fürth (DE); Kohles, Karlheinz, 90461 Nürnberg (DE); Vogel, Jürgen, 90766 Fürth (DE); Füglein, Stefan, 90461 Nürnberg (DE)

(56) Entgegenhaltungen:
- EP-A- 0 755 652
- EP-A- 1 055 389
- DD-A- 51 687
- DE-A- 3 900 617
- DE-A- 4 037 367

## Beschreibung

Die Erfindung betrifft ein Verfahren zur Wärmerückgewinnung bei einer Geschirrspülmaschine.

Bei einer herkömmlichen Geschirrspülmaschine wird während des Reinigungsgangs oder während des Klarspülgangs die verwendete Reinigungs- bzw. Klarspülflüssigkeit erwärmt, um eine bessere Reinigungswirkung zu erzielen. Nach dem jeweiligen Spüldurchgang wird das Wasser im Spülmaschinensumpf aufgefangen und aus der Geschirrspülmaschine abgepumpt. Die in der abgepumpten Flüssigkeit enthaltene Wärmeenergie geht dabei ungenutzt verloren.

Weiterhin erwärmt sich durch die warme Klarspülflüssigkeit während des Umwälzens der Klarspülflüssigkeit im Klarspülgang das in der Geschirrspülmaschine lagernde Spülgut, so daß dieses anschließend das an ihm haftende Wasser durch die Wärme verdunstet. Dabei kühlt die warme, wasserdampfhaltige Spülraumatmosphäre während der Trockenphase unter Wärmeabgabe an eine kühle Spülrauminnenwand ab, wobei zusätzlich Wasser kondensiert. Zur Beschleunigung des Trockenvorgangs ist es bekannt, die warme, wasserdampfhaltige Luft aus dem Spülraum über speziell gekühlte Kondensationsflächen zu führen.

Aus der EP 0 755 652 A2 ist eine Geschirrspülmaschine mit einem geschlossenen Luftkreislauf zur Verkürzung der Trockenphase bekannt. Dabei wird warme, wasserdampfhaltige Luft aus dem Spülraum durch eine erste Öffnung von einem Ventilator angesaugt, über eine Kondensätionsfläche geleitet, abgekühlt in den Spülraum zurückgeführt. Gleichzeitig saugt ein zweiter Ventilator Luft von außerhalb der Geschirrspülmaschine an und leitet diese auf der Gegenseite der Kondensationsfläche vorbei, wo sich die Außenluft erwärmt und danach wieder aus der Spülmaschine ausgeblasen wird. Durch den Luftaustausch wird Wärmeenergie vom Spülrauminnern über die Kondensationsfläche auf die Außenluft übertragen und somit ebenfalls aus der Geschirrspülmaschine abgeführt.

Die Geschirrspülmaschine der DE 30 21 746 A1 weist unter anderem einen Spülbehälter, einen Wärmetauscher an einer Außenseite des Spülbehälters und einen mit einem Isoliermantel ausgestatteten Vorratsbehälter auf. Bei einem Programmabschnitt Reinigen wird kaltes Frischwasser im Spülbehälter der Geschirrspülmaschine erwärmt und versprüht. Nach Erreichen einer vorgegebenen Temperatur und einer anschließenden Einwirkzeit wird der Wärmetauscher aus dem Frischwassernetz mit kaltem Wasser gespeist. Dieses Wasser entzieht der weiterhin versprühten heißen Spülflüssigkeit im Spülbehälter Wärme. Dieser Wärmeaustausch wird solange durchgeführt, bis die Temperatur im Spülbehälter relativ stark abgesunken ist und der das Flüssigkeitsvolumen für einen folgenden Programmabschnitt aufnehmende Wasservorratsbehälter gefüllt ist. In einem anschließenden Zwischenspülgang wird nur Frischwasser verwendet. Der nachfolgende Programmabschnitt Klarspülen verwendet das erwärmte Wasser aus dem Vorratsbehälter. Im Programmabschnitt Trocknen wird der Wärmetauscher mit kaltem Wasser gefüllt das sich durch die Kondensation von Wasserdampf an der Innenseite des Spülbehälters aufwärmt.

GB 2 139 083 A offenbart die Nutzung von Abwärme beim Betrieb einer Geschirrspülmaschine. Ein Vorratsbehälter für Wasser wird Wärmeleitfähig mit dem Spülbehälter der Geschirrspülmaschine verbunden. In einem vorrausgehenden Spülgang wird ein Teil des Wassers im Vorratsbehälter in den Spülbehälter eingesprüht und danach abgepumpt. In einem Reinigungsschritt wird das restliche Wasser des Vorratsbehälters in den Spülbehälter gefüllt und auf eine vorbestimmte Temperatur aufgeheizt und umgewälzt. Nachdem eine Reinigungstemperatur erreicht wurde oder nach einer bestimmten Zeit wird der Vorratsbehälter mit Wasser gefüllt. Dieses Wasser wird durch thermischen Kontakt mit dem Spülbehälter aufgewärmt. In einem Zwischenspülgang wird ein Teil des erwärmten Wassers zum Spülen verwendet. In einem Klarspülschritt wird das restliche erwärmte Wasser aus dem Vorratsbehälter in den Spülbehälter eingebracht, auf eine vorbestimmte Temperatur erwärmt und umgewälzt. Danach wird das Wasser aus dem Spülbehälter abgepumpt und gleichzeitig der Vorratsbehälter wieder mit Wasser gefüllt. Dadurch wird der Spülbehälter gekühlt und beim Trocknen entstehender Wasserdampf kondensiert.

Es ist daher Aufgabe der Erfindung, ein Verfahren zur Wärmerückgewinnung bei einer Geschirrspülmaschine vorzusehen, bei dem vor dem Abpumpen von Spülflüssigkeit dieser Wärme entzogen und nutzbar gemacht wird, um den Gesamtenergieverbrauch eines Geschirrspüldurchlaufs zu verringern.

Diese Aufgabe wird mit den Merkmalen des Anspruchs 1 gelöst.

Bei dem Verfahren zur Wärmerückgewinnung gemäß Anspruch 1 wird die im Spülraum erwärmte und wasserdampfhaltige Luft durch Wärmeübertragung auf das Wasser in einem separat vom Spülraum angeordneten Wasserbehälter und durch Kondensation von Wasserdampf abgekühlt. Die Wärmeübertragung vom Spülraum auf das Wasser im Wasserbehälter findet dabei nur während spezieller Phasen eines gesamten Geschirrspüldurchlaufs statt.

Dies können zum einen speziell vorgesehene Abkühlphasen zwischen den einzelnen Spüldurchgängen sein. Dabei wird erwärmte Spülflüssigkeit vor dem Abpumpen aus der Geschirrspülmaschine zunächst im Spülmaschinensumpf aufgefangen und dort abgekühlt. Die Abkühlung erfolgt durch Wärmeabgabe an die Luft und Verdunstung in den Spülmaschinenraum. Von dort gelangt die Wärme und der Wasserdampf zum Wasserbehälter zur Erwärmung des Wassers. Diese Abkühlphase kann z.B. für einige Minuten erfolgen. Eine solche Abkühlphase kann sich immer dann an einen vorherigen Spülgang anschließen, wenn dabei zuvor die Spülflüssigkeit erwärmt wurde, z.B. nach einem warmen Vorspülgang, nach dem Reinigungsspülgang oder nach dem Klarspülgang.

Eine Wärmeübertragung aus dem Spülraum an das Wasser im Wasserbehälter kann ebenso bereits während eines laufenden Vorspülgangs, eines Reinigungspülgangs oder Klarspülgangs erfolgen, also die jeweilige Spülflüssigkeit noch umgewälzt wird. D.h. während das im Spülmaschinensumpf aufgefangene Wasser von der Umwälzpumpe angesaugt und über Sprüharme im Spülraum auf das lagernde Spülgut verteilt wird. Durch das Versprühen der Flüssigkeit aus den Sprüharmen ist dabei eine Wärmeübertragung von der erwärmten Flüssigkeit auf die Luft sowie die Verdampfung der Flüssigkeit besonders hoch. Somit kann während des Wasserumwälzens eine hohe Wärmemenge aus der Spülraumluft entnommen werden, während die Abkühlung des umgewälzten Wassers besonders schnell erfolgt.

Durch das Abkühlen der Spülflüssigkeit im Spülmaschinensumpf oder während des Umwälzens wird somit vor dem Abpumpen der entsprechenden Spülflüssigkeit aus der Geschirrspülmaschine der Flüssigkeit Wärme entzogen und auf das Wasser im Wasserbehälter übertragen. Das im Wasserbehälter erwärmte Wasser steht dann für einen nachfolgenden Spülgang zur Verfügung und muß nicht von der Temperatur des Frischwassers aus aufgeheizt werden. Dies verringert die Heizenergie zum Aufheizen der Spülflüssigkeiten beim nächsten Spülgang und verringert somit den Energieverbrauch der Geschirrspülmaschine.

Die Luft aus dem Spülraum kann zum Wärmeaustausch über eine Außenfläche des Wasserbehälters, über die Wasseroberfläche im Wasserbehälter oder durch das Wasser im Wasserbehälter geleitet werden. Der Wasserbehälter kann dabei ein in der Geschirrspülmaschine ohnehin vorhandener Regenerierwasserbehälter oder ein separat vorzusehender Wasserbehälter zur Bevorratung von Wasser sein.

Vorteilhafterweise ist der Wasserbehälter thermisch isoliert vom Spülraum angeordnet, so daß eine Wärmeübertragung nur über den Austausch der Luft zwischen Wasserbehälter und Spülraum stattfinden kann.

Zusätzlich kann vorgesehen werden, daß eine Wärmeübertragung aus dem Spülraum zum Wasser im Wasserbehälter ebenfalls während der Trockenphase erfolgt. Dabei verkürzt sich die Trockenphase durch die Kondensation des Wasserdampfs aus dem Spülraum am Wasserbehälter oder beim Vorbei- oder Durchleiten der Luft am/durch das kühlere Wasser im Wasserbehälter.

Bei einer besonders vorteilhaften Ausgestaltung erfolgt die Abkühlung des in der Geschirrspülmaschine umgewälzten Wassers erst während einer Schlußphase des jeweiligen Spüldurchgangs, d.h. z.B. in der Schlußphase des Vörspülgangs, des Reinigungsspülgangs und/oder des Klarspülgangs. Alternativ kann der entsprechende Spülgang um einige Minuten verlängert werden, während das umgewälzte Spülwasser abgekühlt wird. Dadurch wird vermieden, daß bereits während einer Phase des entsprechenden Spülgangs, in der zur Erzielung des optimalen Reinigungsergebnisses warmes Wasser benötigt wird, die Abkühlung des Wassers erfolgt. Da hierbei die Wärmerückgewinnung während des Umwälzens besonders effizient ist, verlängert sich der entsprechende Spülgang durch die Abkühlphase unwesentlich.

Besonders vorteilhaft ist die Verwendung des durch die Wärmerückgewinnung erwärmten Wassers aus dem Wasserbehälter im direkt anschließenden Spülgang. Dadurch verringert sich die Zeit, in der das Wasser im Wasserbehälter gelagert ist, so daß das Abkühlen des Wassers durch Wärmeverlust an die Umgebung gering ist. Gleichzeitig ist die Effizienz des Wärmetauschs am größten, wenn der Temperaturunterschied des im Wasserbehälter bevorrateten Wassers und der Temperatur im Spülraum am größten ist, d.h. wenn im Wasserbehälter möglichst kühles Frischwasser zur Verfügung steht.

Der Austausch der Luft zwischen dem Wasserbehälter und dem Spülraum kann durch einen oder mehrere Luftkanäle erfolgen, wobei besonders vorteilhaft der Luftaustausch durch ein Gebläse zum gewünschten Zeitpunkt ein- und ausschaltbar ist. Dabei wird vermieden, daß der Luftaustausch bereits während des gesamten Vor-, Reinigungs- oder Klarspüldurchlaufs stattfindet.

Anhand einer Zeichnung wird ein Ausführungsbeispiel der Erfindung näher erläutert.

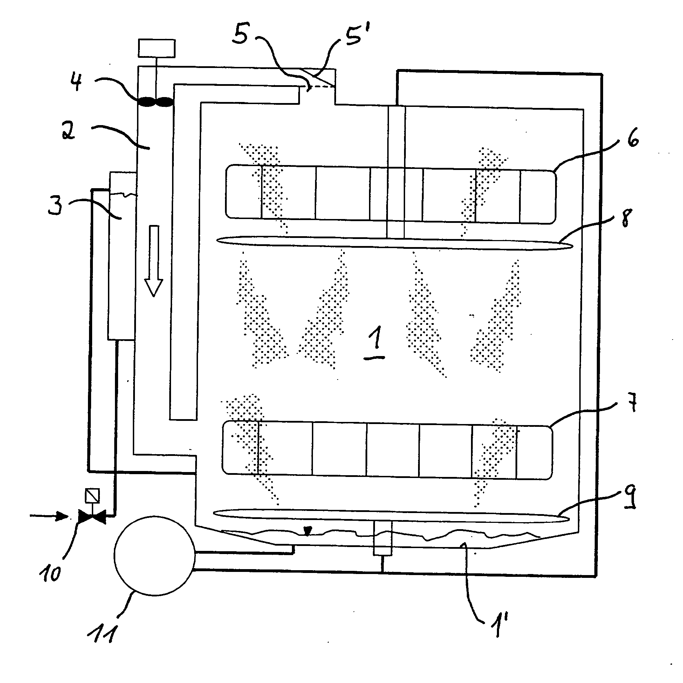

Fig. 1 zeigt schematisch eine Querschnittsansicht durch einen Spülraum 1 einer Geschirrspülmaschine mit einem außerhalb des Spülraums 1 verlaufenden Luftkanal 2 zur Luftzirkulation. Seitlich angrenzend an den Luftkanal 2 ist ein Wasserbehälter 3 angeordnet. Der Luftkanal 2 und der Wasserbehälter 3 weisen eine gemeinsame Trennwand zur Kondensation und Wärmeübertragung auf.

Die Luftzirkulation im Luftkanal 2 wird durch ein motorgetriebenes Gebläse 4 bewirkt. Dabei wird Luft an der Oberseite des Spülraums 1 über eine Öffnung 5 abgeführt und im unteren Bereich des Spülraums wieder in den Spülraum zurückgeleitet. An der oberen Öffnung 5 zum Spülraum 1 kann bei Bedarf eine Luftklappe 5' angeordnet werden, die sich durch die Druckdifferenz zwischen dem Luftkanal 2 und dem Spülraum 1 nach dem Einschalten des Gebläses 4 selbsttätig öffnet und sich durch ihr Eigengewicht nach dem Abschalten des Gebläses 4 wieder schließt.

Innerhalb des Spülraum 1 sind auf an sich bekannte Weise ein oberer Geschirrkorb 6, ein unterer Geschirrkorb 7, ein oberer Sprüharm 8 und ein unterer Sprüharm 9 angeordnet.

Die Wasserzufuhr in den Wasserbehälter 3 erfolgt über ein Ventil 10, das mit der Frischwasserzufuhr verbunden ist. Durch einen Überlauf im oberen Bereich des Wasserbehälters 3 läuft die der zugeführten Wassermenge entsprechende Wassermenge in den Spülmaschinensumpf 1' und steht dort für einen folgenden Spülgang zur Verfügung.

Eine Wasserpumpe 11 saugt die im Spülmaschinensumpf l'aufgefangene Spülflüssigkeit an und pumpt diese zum oberen und unteren Sprüharm 8,9.

Im folgenden wird ein Beispiel eines Geschirrspüldurchlaufs beschrieben, bei dem eine Wärmerückgewinnung durch Erwärmung des im Wasserbehälter 3 bevorrateten Wassers erfolgt. Der Spüldurchgang umfaßt dabei einen Vorspülgang, einen Hauptreinigungsspülgang, einen Klarspülgang und eine Trockenphase. Bei dem Geschirrspüldurchlauf werden nur die Wärmerückgewinnung betreffende Verfahrensabläufe dargestellt.

Die weiteren Einzelheiten erfolgen auf an sich bekannte Weise.

Nach dem Einstellen des Spülprogramms und dem Einschalten der Geschirrspülmaschine läuft für den warmen Vorspülgang Frischwasser in den Spülmaschinensumpf 1', wo das Wasser durch eine Heizung erwärmt wird. Nach Erreichen eines bestimmten Wasserpegels wird die Pumpe 11 eingeschaltet und das Wasser innerhalb des Spülraums 1 umgewälzt. Während des Wasserumwälzens kann das Wasser durch die Heizung weiter erhitzt werden.

Gegen Ende des Vorspülgangs wird die Heizung ausgeschaltet und das Gebläse 4 eingeschaltet, wodurch warme, wasserdampfhaltige Luft aus dem Spülraum 1 durch den Luftkanal 2 geleitet wird. Die warme, wasserdampfhaltige Luft gibt am Wasserbehälter 3 Wärme ab und ein Teil des Wasserdampfs kondensiert unter Wärmeabgabe.

Nach Abschluß des Vorspülgangs wird die Pumpe 11 abgeschaltet. Das erwärmte Vorspülwasser bleibt im Spülmaschinensumpf 1' stehen, so daß es Wärme und Wasserdampf zum Spülrauminnern hin abgibt. Während dieser Zeit bleibt das Gebläse 4 noch eingeschaltet, so daß weiterhin Wärme aus dem Spülraum 1 zum Wasserbehälter 3 übertragen wird.

Nachdem die Vorspülflüssigkeit auf diese Weise ungefähr für 4 Minuten bei abgeschalteter Pumpe 11 abgekühlt wurde, wird das Gebläse 4. abgeschaltet, die Vorspülflüssigkeit abgepumpt und die Frischwasserzufuhr für den Hauptreinigungsspülgang erfolgt durch den Wasserbehälter. 3. Dazu wird das Wasserventil 10 geöffnet und Frischwasser in den Wasserbehälter 3 eingeleitet. Aus dem Überlauf des Wasserbehälters 3 fließt das Wasser zum Spülmaschinensumpf 1' hin ab. Dabei wird das im Wasserbehälter 3 erwärmte Wasser für den Hauptreinigungsspülgang verwendet.

Nachdem eine bestimmte Wassermenge zugeführt wurde, wird die Pumpe 11 eingeschaltet und die Heizung heizt dabei das umgewälzte Wasser auf die gewünschte Endtemperatur.

Gegen Ende des Hauptreinigungsspülgangs, d.h. ungefähr die letzten 3 bis 5 Minuten, wird das Gebläse 4 eingeschaltet und es erfolgt wiederum ein Wärmeübertrag vom Spülraum 1 zum Wasser im Wasserbehälter 3. Nach dem Ende des Hauptreinigungsspülgangs wird, wie zuvor, das Wasser zunächst im Spülmaschinensumpf 1' abgekühlt und die Wärme zum Wasserbehälter für ca. 3 bis 5 Minuten übertragen. Danach wird das Gebläse 4 abgestellt und das abgekühlte Wasser aus dem Spülmaschinensumpf abgepumpt.

Für den anschließenden Klarspülgang wird wiederum das Wasser von der Frischwasserzufuhr über das Ventil 10 in den Wasserbehälter 3 zugeführt, wo das vorgewärmte Wasser durch den Überlauf in den Spülmaschinensumpf 1' abfließt. Damit steht für den Klarspülgang das während des Reinigungsspülgangs erwärmte Wasser zur Verfügung und muß nicht von der kälteren Frischwassertemperatur auf die gewünschte Temperatur des Klarspülgangs aufgeheizt werden.

Nach Erreichen der gewünschten Wassermenge wird ebenfalls das Wasser umgewälzt und bis zum Erreichen der gewünschten Temperatur durch die Heizung aufgeheizt. Nach dem Abschalten der Wasserumwälzung und damit Beendigung des Klarspülgangs wird das Klarspülwasser im Spülmaschinensumpf vor dem Abpumpen für ungefähr 3 bis 5 Minuten abgekühlt und dabei die Wärme auf die benachbarte Wasserbehälterwandung übertragen.

Danach wird das Wasser abgepumpt und das Gebläse 4 wird eingeschaltet, um die direkt anschließende Trockenphase durchzuführen. Während der Trockenphase wird durch das Gebläse 4 die warme, wasserhaltige Luft aus dem Spülraum 1 durch den Luftkanal 2 umgewälzt, wobei ein großer Teil des Wasserdampfs an der Grenzfläche zwischen Luftkanal 2 und Wasserbehälter 3 kondensiert. Durch die Kondensation des Wassers wird die Trockenphase beschleunigt und gleichzeitig die Energie auf das Wasser im Wasserbehälter 3 übertragen, wobei auch das zuvor erwärmte Spülgut Wärme abgibt.

Nach Abschluß der Trockenphase kann das getrocknete Spülgut aus dem Spülraum 1 entnommen werden. Das im Wasserbehälter 3 bevorratete, erwärmte Wasser steht nun für einen anschließenden Geschirrspüldurchlauf zur Verfügung, bei dem nun die Frischwasserzufuhr ebenfalls über das Wasserventil 10 und durch den Wasserbehälter 3 erfolgt.

Auf diese Weise wird von Spülgang zu Spülgang und von einem gesamten Geschirrspüldurchlauf zu dem nächsten Geschirrspüldurchlauf warmes Wasser im Wasserbehälter 3 zur Verfügung gestellt, das durch die Restwärme des Wassers vor dem Abpumpen erwärmt wurde.

### Bezugszeichenliste

- 1:: Spülraum
- 1':: Spülmaschinensumpf
- 2:: Luftkanal
- 3:: Wasserbehälter
- 4:: Gebläse
- 5:: Öffnung
- 5':: Luftklappe
- 6:: oberer Geschirrkorb
- 7:: unterer Geschirrkorb
- 8:: oberer Sprüharm
- 9:: unterer Sprüharm
- 10:: Wasserventil
- 11:: Wasserpumpe

## Patentansprüche

1. Verfahren zur Wärmerückgewinnung bei einer Geschirrspülmaschine mit einem Spülraum (1) und einem vom Spülraum (1) getrennt angeordneten Wasserbehälter (3), bei dem das Wasser in dem Wasserbehälter (3) durch im Spülraum (1) erwärmte Luft und im Spülraum (1) erzeugten Wasserdampf erwärmbar und das erwärmte Wasser für einen Wasserzufuhrschritt verwendbar ist und bei dem die Wärmeübertragung auf das Wasser im Wasserbehälter (3) zumindest während eines der folgenden Schritte ausführbar ist:
S1) Abkühlen einer im Spülmaschinensumpf des Spülraums (1) aufgefangenen, wannen Spülflüssigkeit vor dem Abpumpen durch Verdunstung und Wärmeabgabe an die Luft im Spülraum (1),
S2) Abkühlen der während eines Vorspülgangs im Spülraum (1) umgewälzten, warmen Spülflüssigkeit durch Verdunstung und Wärmeabgabe an die Luft im Spülraum (1),
S3) Abkühlen der während eines Reinigungsspülgangs im Spülraum (1) umgewälzten, warmen Spülflüssigkeit durch Verdunstung und Wärmeabgabe an die Luft im Spülraum (1), oder
S4) Abkühlen der während eines Klarspülgangs im Spülraum (1) umgewälzten, warmen Spülflüssigkeit durch Verdunstung und Wärmeabgabe an die Luft im Spülraum (1),
wobei die Wärmeübertragung durch den Austausch des im Spülraum erzeugten Wasserdampfes und der erwärmten Luft zwischen Spülraum (1) und Wasserbehälter (3) erfolgt, und die erwärmte Luft an der Oberseite des Spülraums (1) über eine Öffnung abgeführt wird
wobei der Wasserbehälter (3) thermisch isoliert vom Spülraum (1) angeordnet ist und die erwärmte Luft mit dem im Spülraum erzeugten Wasserdampf an einer Außenfläche des Wasserbehälters (3) vorbeigeleitet wird.

2. Verfahren nach Anspruch 1, **dadurch gekennzeichnet, dass** die Wärmeübertragung auf das Wasser im Wasserbehälter (3) zusätzlich während des folgenden Schritts ausführbar ist:
S5) Abkühlen des Spülraums (1) und des darin lagernden Spülguts während einer Trockenphase.

3. Verfahren nach Anspruch 1 oder 2, **dadurch gekennzeichnet, dass** die Abkühlung der umgewälzten Flüssigkeit bei einem oder mehreren der Schritte S2, S3 während der Schlussphase des jeweiligen Schritts ausführbar ist.

4. Verfahren nach einem der vorhergehenden Ansprüche, **dadurch gekennzeichnet, dass** das während des Schritts S1 und/oder S2 erwärmte Wasser aus dem Wasserbehälter (3) für den Reinigungsspülgang zugeführt wird.

5. Verfahren nach einem der vorhergehenden Ansprüche, **dadurch gekennzeichnet, dass** das während des Schritts S1 und/oder S3 erwärmte Wasser aus dem Wasserbehälter (3) für den Klarspülgang zugeführt wird.

6. Verfahren nach einem der vorhergehenden Ansprüche, **dadurch gekennzeichnet, dass** das während des Schritts S1, S4 und/oder S5 erwärmte Wasser aus dem Wasserbehälter (3) für den Vorspülgang zugeführt wird.

7. Verfahren nach einem der vorhergehenden Ansprüche, **dadurch gekennzeichnet, dass** die Luft aus dem Spülraum (1) durch einen oder mehrere Luftkanäle (2) zwischen dem Spülraum (1) und dem Wasserbehälter (3) austauschbar ist.

8. Verfahren nach Anspruch 7, **dadurch gekennzeichnet, dass** der Luftaustausch zwischen dem Spülraum (1) und dem Wasserbehälter (3) mittels eines Gebläses (4) steuerbar ist.

## Claims

1. Process for heat recovery in a dishwasher having a washing chamber (1) and a water container (3) arranged separately from the washing chamber (1) and in which the water in the water container (3) can be heated by air heated in the washing chamber (1) and water vapour produced in the washing chamber (1) and the heated water can be used for a water-supply step and in which heat transfer to the water in the water container (3) can be carried out at least during one of the following steps:
S1) cooling a warm washing liquid collected in the washing machine sump of the washing chamber (1) before pump-draining by evaporation and heat release to the air in the washing chamber (1),
S2) cooling the warm washing liquid circulated during a pre-washing stage in the washing chamber (1) by evaporation and heat release to the air in the washing chamber (1),
S3) cooling the warm washing liquid circulated during a cleaning stage in the washing chamber (1) by evaporation and heat release to the air in the washing chamber (1), or
S4) cooling the warm washing liquid circulated during a rinsing stage in the washing chamber (1) by evaporation and heat release to the air in the washing chamber (1), wherein heat transfer is effected by exchange of the water vapour produced in the washing chamber and the heated air between washing chamber (1) and water container (3), and the heated air is removed via an opening on the upper side of the washing chamber (1), wherein the water container (3) is arranged to be thermally insulated from the washing chamber (1) and the heated air with the water vapour produced in the washing chamber is passed over an outer surface of the water container (3).

2. Process according to claim 1, **characterised in that** heat transfer to the water in the water container (3) can be carried out additionally during the following step:
S5) cooling the washing chamber (1) and the goods to be washed being stored therein during a drying phase.

3. Process according to claim 1 or 2, **characterised in that** cooling of the circulated liquid can be carried out in one or more of steps S2, S3 during the concluding phase of the particular step.

4. Process according to one of the preceding claims, **characterised in that** the water heated during step S1 and/or S2 is supplied from the water container (3) for the cleaning stage.

5. Process according to one of the preceding claims, **characterised in that** the water heated during step S1 and/or S3 is supplied from the water container (3) for the rinsing stage.

6. Process according to one of the preceding claims, **characterised in that** the water heated during step S1, S4 and/or S5 is supplied from the water container (3) for the pre-washing stage.

7. Process according to one of the preceding claims, **characterised in that** the air from the washing chamber (1) can be exchanged between the washing chamber (1) and the water container (3) through one or more air channels (2).

8. Process according to claim 7, **characterised in that** the air exchange between the washing chamber (1) and the water container (3) can be controlled by means of a fan (4).

## Revendications

1. Procédé pour récupérer de la chaleur dans un lave-vaisselle comprenant un espace de lavage (1) et un récipient d'eau (3) disposé séparément de l'espace de lavage (1), dans lequel l'eau dans le récipient d'eau (3) peut être réchauffée par l'air réchauffé dans l'espace de lavage (1) et par la vapeur d'eau générée dans l'espace de lavage (1), et l'eau réchauffée est utilisable pour une étape d'amenée d'eau, et dans lequel le transfert de chaleur à l'eau dans le récipient d'eau (3) peut être exécuté au moins pendant l'une des étapes suivantes consistant à :
S1) refroidir un liquide de lavage chaud recueilli dans le collecteur de lave-vaisselle de l'espace de lavage (1) avant l'évacuation par pompage, par évaporation et dégagement de chaleur vers l'air dans l'espace de lavage (1),
S2) refroidir le liquide de lavage chaud, mis en circulation pendant un cycle de prélavage dans l'espace de lavage (1), par évaporation et dégagement de chaleur vers l'air dans l'espace de lavage (1),
S3) refroidir le liquide de lavage chaud, mis en circulation dans l'espace de lavage (1) pendant un cycle de lavage de nettoyage, par évaporation et dégagement de chaleur vers l'air dans l'espace de lavage (1), ou
S4) refroidir le liquide de lavage chaud, mis en circulation pendant un cycle de lavage de rinçage dans l'espace de lavage (1), par évaporation et dégagement de chaleur vers l'air dans l'espace de lavage (1),
dans lequel le transfert de chaleur s'effectue par l'échange de la vapeur d'eau générée dans l'espace de lavage et de l'air réchauffé entre l'espace de lavage (1) et le récipient d'eau (3), et l'air réchauffé est évacué au niveau du côté supérieur de l'espace de lavage (1) par l'intermédiaire d'une ouverture,
dans lequel le récipient d'eau (3) est disposé en étant thermiquement isolé par rapport à l'espace de lavage (1) et l'air réchauffé avec la vapeur d'eau générée dans l'espace de lavage est amené à passer devant une surface extérieure du récipient d'eau (3).

2. Procédé selon la revendication 1, **caractérisé en ce que** le transfert de chaleur vers l'eau dans le récipient d'eau (3) peut en outre être exécuté pendant l'étape suivante consistant à :
S5) refroidir l'espace de lavage (1) et les objets à laver rangés dans celui-ci pendant une phase de séchage.

3. Procédé selon la revendication 1 ou 2, **caractérisé en ce que** le refroidissement du liquide mis en circulation peut être exécuté dans une ou plusieurs des étapes S2, S3 pendant la phase finale de l'étape respective.

4. Procédé selon l'une quelconque des revendications précédentes, **caractérisé en ce que** l'eau réchauffée pendant l'étape S1 et/ou S2 est amenée du récipient d'eau (3) pour le cycle de lavage de nettoyage.

5. Procédé selon l'une quelconque des revendications précédentes, **caractérisé en ce que** l'eau réchauffée pendant l'étape S1 et/ou S3 est amenée du récipient d'eau (3) pour le cycle de lavage de rinçage.

6. Procédé selon l'une quelconque des revendications précédentes, **caractérisé en ce que** l'eau réchauffée pendant l'étape S1, S4 et/ou S5 est amenée du récipient d'eau (3) pour le cycle de prélavage.

7. Procédé selon l'une quelconque des revendications précédentes, **caractérisé en ce que** l'air provenant de l'espace de lavage (1) peut être échangé à travers un ou plusieurs canaux d'air (2) entre l'espace de lavage (1) et le récipient d'eau (3).

8. Procédé selon la revendication 7, **caractérisé en ce que** l'échange d'air entre l'espace de lavage (1) et le récipient d'eau (13) peut être commandé au moyen d'un ventilateur (4).
